(19) Europäisches Patentamt
European Patent Office
Office européen des brevets

(11) EP 3 236 062 A1

(12) EUROPEAN PATENT APPLICATION

(43) Date of publication:
25.10.2017 Bulletin 2017/43

(51) Int Cl.:
$F03B\ 13/14^{(2006.01)}$          $F03B\ 15/00^{(2006.01)}$
$G05B\ 13/04^{(2006.01)}$

(21) Application number: 16166753.0

(22) Date of filing: 22.04.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **National University of Ireland, Maynooth**
**Maynooth, County Kildare (IE)**

(72) Inventors:
• **Ringwood, John**
  **Dublin 12 (IE)**
• **Genest, Romain**
  **Dublin 15 (IE)**

(74) Representative: **FRKelly**
**27 Clyde Road**
**Dublin D04 F838 (IE)**

(54) **CONTROL SYSTEM AND METHOD FOR ENERGY CAPTURE SYSTEM**

(57)     A computer-implemented method of controlling a power take-off (PTO) of an energy converter apparatus having at least one body which receives energy from their environment and whose energy is absorbed by said PTO is described. The method involves: (a) receiving an input describing the motion of the at least one body making up the apparatus; (b) predicting the excitation force $F_{ex}$ which will be incident on the body over a prediction horizon Hp, by approximating said excitation force using generalised truncated half-range Chebyshev-Fourier (HRCF) basis functions; (c) solving an optimal control problem, defined in terms of optimising a cost function J representing the energy absorbed by the PTO over the prediction horizon Hp, using a HRCF pseudospectral optimal control wherein the state and control variables are approximated by their truncated half-range Chebyshev Fourier series to generate an optimal reference trajectory; (d) providing as an output to said PTO a control signal adapted to cause the PTO to approximate said optimal reference trajectory; and (e) repeating steps (a) to (d) after a calculation interval Tc where Tc < Hp.

Fig. 4

**Description**

<u>Technical Field</u>

This invention relates to energy capture systems and to systems and methods for control thereof. It has particular application in the field of renewable energy capture systems such as wave, wind and tidal energy conversion systems.

<u>Background Art</u>

In the field of renewable energy, the problem of controlling the energy capture while respecting physical displacement and force constraints of the energy capture device is a well-known one. Typically a controller will implement a control algorithm which aims to maximise the energy captured from the environment, while being mindful of the need to keep the system operating within safe constraints.

Since wave energy is struggling to become economic, due to high capital and operational costs and significant safety and durability requirements, adding device intelligence via embedded computing to boost the power production for a relatively small marginal cost constitutes a sensible approach. High-performance control of WECs can be instrumental in making wave energy harvesting economic

A wide variety of WEC devices has been designed and tested in recent years, based on bottom-referenced or self-reacting principle, in order to recover energy from the waves. Dynamical equations are used to describe the behaviour of WECs in real sea conditions for either single or multi-body devices and most of the studies, including the present work, are based on linearised fluid-structure interaction.

Optimal control of wave energy converters require knowledge of future values of the excitation force generated by the fluid onto the device's hull, and potentially require the use of predictive algorithms. The loss in the accuracy of predictive algorithms limits the prediction window for practical real-time usage. Thus, updates have to be made to calculate future values of the wave excitation force experienced by the device's hull. A limited prediction horizon leads to a receding horizon type of control, and implies a relatively short computation time, suggesting the choice of pseudospectral methods for the efficient calculation of the optimal reference trajectory.

Receding horizon control has been popular in traditional control (feedback servomechanisms) since the 1980s, under the moniker of model-based predictive control (MPC) and has been recently applied to the energy maximisation problem in wave energy over the past decade, for example in "Maximisation of energy capture by a wave-energy point absorber using model predictive control", Cretel, Julien A.M. et al., Proceedings of the 18th IFAC World Congress, Milano, Italy, Aug, pp. 3714-3721. 2011; and in "Constrained optimal control of a heaving buoy wave-energy converter", Hals, Jørgen et al., Journal of Offshore Mechanics and Arctic Engineering 133, no. 1 (2011): 011401. MPC gives promising results, since it allows high performance levels to be reached while considering physical constraints, but suffers from significant computational demands. The realtime implementation of a model predictive controller for a wave energy device remains a complex and critical issue, and MPC control algorithms developed for wave energy converter (WEC) applications are almost impossible to implement, due to their very high computational requirements.

Control algorithms based on spectral methods offer an interesting alternative to MPC, as they can be used to solve optimal control problems under constraints using a specific parametrisation of the solution. Spectral methods have shown promise in computational aspects, offering the possibility of scaling in complexity/performance by changing the number of approximating basis functions. However, to date, only single period pseudospectral solutions have been presented in the renewable energy field - see for example "Numerical optimal control of wave energy converters," G. Bacelli and J. V. Ringwood, Sustainable Energy, IEEE Transactions on, vol. 6, no. 2, pp. 294-302, 2015; and "Constrained control of arrays of wave energy devices," International Journal of Marine Energy, G. Bacelli and J. Ringwood, vol. 34, pp. e53 - e69, 2013, special Issue Selected Papers - {EWTEC2013}.

Fourier-type solutions are a natural choice for periodic phenomena. In the field of WECs, they would seem to be a natural choice because wave elevation, excitation force and radiation force are usually well described using Fourier analysis. However real-time control and finite time control horizons require approximations of non-periodic functions in order to simulate both transient and steady-state responses of the device, since the prediction horizon is limited, and wave surface elevation, fluid-structure interaction forces and body motion are usually described using spectral forms. Finite time horizons furthermore often involve boundary discontinuities which require increasing numbers of higher order harmonics to reach an accurate description, with consequent increased calculation overhead.

It is an object of the present invention to provide a novel control system and method.

<u>Disclosure of the Invention</u>

There is provided a computer-implemented method of controlling a power take-off (PTO) of an energy converter apparatus having at least one body which receives energy from their environment and whose energy is absorbed by said PTO, the method comprising the steps of:

(a) receiving an input describing the motion of the at least one body making up the apparatus;

(b) predicting the excitation force $F_{ex}$ which will be incident on the body over a prediction horizon Hp, by approximating said excitation force using generalised truncated half-range Chebyshev-Fourier (HRCF) basis functions;

(c) solving an optimal control problem, defined in terms of optimising a cost function J representing the energy absorbed by the PTO over the prediction horizon Hp, using a HRCF pseudospectral optimal control wherein the state and control variables

are approximated by their truncated half-range Chebyshev Fourier series to generate an optimal reference trajectory;

(d) providing as an output to said PTO a control signal adapted to cause the PTO to approximate said optimal reference trajectory; and

(e) repeating steps (a) to (d) after a calculation interval Tc where Tc < Hp.

The method permits an efficient and accurate representation of the motion of the body, which can deal with boundary effects associated with receding horizon representations, and which is calculable in real time.
Preferably, step (c) comprises:

(i) expressing the motion of the body in terms of a projection matrix X1 defining the body's position, and a projection matrix X2 defining the body's velocity;
(ii) defining a control variable vector and its projection matrix $U^T$;
(iii) defining a cost function $J = -U^T X_2$
(iv) determining a set of 2N + 2 variables defining the N + 1 components of X1 and the N + 1 components of X2 for a given projection vector U of the control variable by cancellation of residuals at a series of N + 1 collocation points within the prediction horizon interval; and
(v) solving the cost function $J = -U^T X_2$ to determine an optimal trajectory [X1, X2, U] to optimise energy absorption while respecting predefined constraints on the position, velocity and control force.

The method preferably further comprises the step of tracking the trajectory of said body using a real time controller.
Preferably, said energy conversion apparatus is a wave energy converter system.
Preferably, said step of predicting the excitation force comprises observing incident wave motion on the apparatus and generating a prediction from said observed motion.
Preferably, said prediction horizon $H_P$ is in the range of 0.5 to 30 seconds, more preferably 1 to 20 seconds.
Preferably, the state variables are truncated as a series of N basis functions where N is between 5 and 50, more preferably between 10 and 30.
There is also provided a processor programmed to implement any of the computer-implemented methods defined above.
There is further provided an energy conversion apparatus comprising at least one body which receives energy from its environment, a power take-off (PTO) configured to absorb energy from said body, and a processor programmed to implement the methods defined herein, outputting a control signal for said PTO.

Detailed description of preferred embodiments

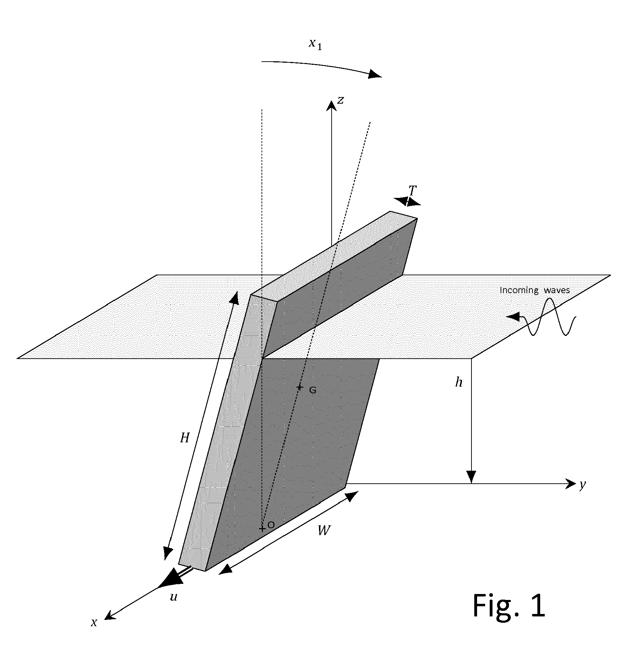

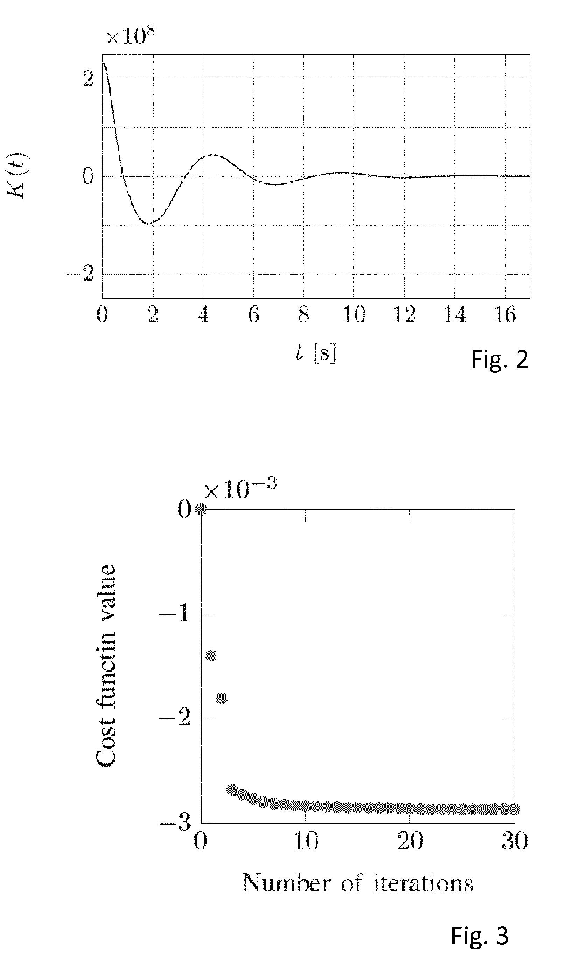

Fig. 1 shows a flap-type wave energy controller (WEC) geometry. This generic WEC is based on the same working principle as the Oyster developed by Aquamarine Power Ltd (see M. Folley, T. Whittaker, and J. Vant Hoff, "The design of small seabed-mounted bottom-hinged wave energy converters," in Proceedings of the 7th European Wave and Tidal Energy Conference, Porto, Portugal, vol. 455, 2007), recovering wave energy from the oscillatory surge motion of a bottom-hinged vertical panel.
The density of the sea water is fixed at $\rho_{water}$ = 1025kg/m³. The geometric characteristics are $W$ = 30m, $T$ = 1m, $h = H$ = 15m, with the body density is assumed to be uniform and equal to $\rho_{body} = \rho_{water}/8$. The total mass of the device is given by $m = \rho_{body} \times W \times T \times L \approx 58 \times 10^3$kg. The device inertia along the x-axis, expressed at the centre of gravity, is $I_G = m(T^2 + H^2)/12$ and is expressed at the centre of the pivot linkage, $I_0 = I_G + m(H/2)^2$. The infinite frequency

asymptote of the added inertia of the device, $I_\infty = 9.81 \times 10^7 \text{kgm}^2$, and the kernel function $K$ of the convolution product used to model the radiation force, are both determined using the potential code Aquaplus (described in G. Delhommeau, "Seakeeping codes aquadyn and aquaplus," 19th WEGEMT School Numerical Simulation of Hydrodynamics: Ships and Offshore Structures, 1993), with $K$ presented in Fig. 2.

Irregular incident waves are considered, and the elevation of the free surface is determined using a Bretschneider spectrum (C. Bretschneider, "Wave variability and wave spectra for wind generated gravity waves," Tech. Memo, No. 118. Beach Erosion Board, USArmy Corps of Eng., Washington DC, 1959), with a bandwidth of $2 \times 10^{-2}$Hz to $5 \times 10^{-1}$Hz and a frequency step $df = 5 \times 10^{-3}$Hz.

The excitation force is determined using the BEM code Aquaplus, based on the free surface elevation with randomly selected phases for the sinusoidal wave components.

The linear model is simulated in real time using a Runge-Kutta method, with a time step of $\Delta t = 10^{-2}s$.

A control algorithm, as described further below, is applied to control the PTO force, with a prediction horizon, under which the optimization process is done, chosen as $T$ = 15s. The number of basis functions used to approximate the solution is $N$ = 15. The sequential quadratic programming algorithm is run for a maximum of 15 iterations, leading to an acceptable ratio between convergence quality and computational time, as shown in Fig. 3.

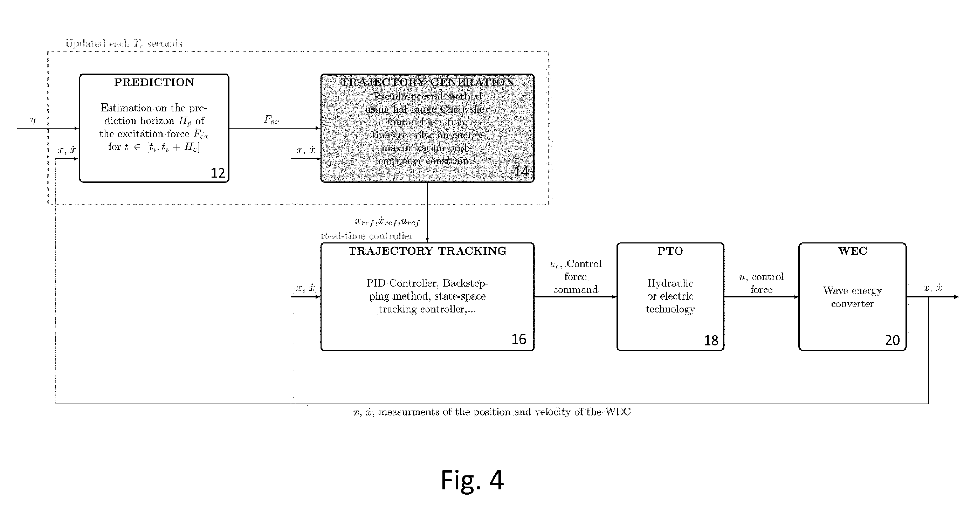

Fig. 4 shows the control algorithm structure in block diagram form. The structure comprises a hierarchically-organised upper and lower loop, which, respectively, generate and track a reference trajectory.

The upper loop predicts the excitation force over the prediction horizon, 12, then determines the reference trajectory, 14, using a pseudospectral method with half-range Chebyshev-Fourier (HRCF) basis functions, solved by a nonlinear programming method, such as sequential quadratic programming algorithm (SQP) (see M. J. Powell, "A fast algorithm for nonlinearly constrained optimization calculations," in Numerical analysis. Springer, 1978, pp. 144-157) implemented in MATLAB via *the fmincon* function.

The lower loop facilitates tracking of the reference trajectory in real time. Trajectory generation is updated at a regular interval $T_s$ and tracked 16 using a standard backstepping method (see P. V. Kokolovie, "The joy of feedback: nonlinear and adaptive,'" 1992). A control force command is sent to the power take-off or PTO, 19, which imposes the control force on the WEC, 20. The resulting position and velocity as measured at the WEC are fed back to the trajectory tracking function 18 in the lower loop and to both the excitation force prediction function 12 and the trajectory generation function 14 in the upper loop.

In order to explain the operation of this algorithm in more detail, the mathematical basis for the algorithm is first established.

**Problem specification**

The optimal control solution for renewable energy devices typically entails an energy production maximization over a given time horizon and under dynamical constraints dictating the allowable system behaviour. Consideration of physical limitations are also essential in the design of a realistic control algorithm and imply additional inequality constraints in the problem formulation. The cost function is defined by equation (2) and depends on the state and control functions, respectively **x** and $u$, of the considered system. The time horizon under which the absorbed energy is maximized is $[t_0, t_0 + T]$, where to $\in \mathrm{R}^+$ corresponds to the initial time and $T \in \mathrm{R}^+$ is the prediction time horizon. This prediction time horizon corresponds to the time window where the energy resource can be forecasted with an acceptable accuracy for use in a pseudospectral optimal control problem formulation. The interval $[t_0, t_0 + T]$ is mapped, for simplicity, into [-1,1], using the affine transformation (1).

$$\tau = \frac{2}{T}(t - t_0) - 1 \tag{1}$$

where $t \in [t_0, t_0+T]$ and $\tau \in [-1,1]$. We consider the following finite-horizon and constrained optimal control problem,

$$\left\{ \begin{array}{ll} \text{Maximize} & J = \int_{-1}^{1} F(\mathbf{x}(\tau), u(\tau), \tau) d\tau \\ \\ \text{Subject to} & \dot{x}(\tau) = f(x, u, \tau), \ \tau \in [-1, 1] \\ & \mathbf{x}(-1) = \mathbf{x}_0 \\ & \mathbf{H}(\mathbf{x}, u) \le 0, \ \tau \in [-1, 1] \end{array} \right\} \qquad (2)$$

where F corresponds to the absorbed power, H corresponds to inequality constraints and f represents the device dynamics.

## CONTROL SOLUTION OUTLINE

*Pseudospectral method:* The method of weighted residuals (MWR) is widely used in various engineering applications to solve boundary-value or eigenvalue problems by expressing the approximated solution in a finite subspace of a Hilbert space. The MWR can be also used for optimal control problems involving the minimization, *or maximization,* of a particular cost function while insuring that the state and control variables respect a specific system of dynamical equations and inequality constraints. The MWR derives an approximate solution for optimal control problems, insuring equality and inequality constraints by annulment of the residuals. Projections of the residuals on a finite dimensional space, spanned by a particular set of orthogonal functions, called trial functions, are cancelled. Unlike MPC, which effectively uses local *zero-order holder* (ZOH) functions to approximate the optimal solution, spectral methods are generally based on global functions defined over the complete control horizon. Various basis functions can be chosen to obtain an approximation of the optimal solution, and the choice of a particular basis is discussed in section II-B2. The choice of trial functions dictates the type of spectral method use, for example the Galerkin method, or collocation methods.

The cost function minimization, *or maximization,* is realized using nonlinear programming methods (see Y. Nesterov, A. Nemirovskii, and Y. Ye, Interior-point polynomial algorithms in convex programming. SIAM, 1994, vol. 13), such as sequential quadratic program algorithms, leading to interesting computational aspects since the solution is sought in a finite dimensional vector space.

*Function approximation:* Pseudospectral methods are based on an approximation of the state and control variables into a N-dimensional vector space $E$ generated by an orthogonal basis of real functions, $B = \{\varphi_1, ..., \varphi_N\}$. This approximation is usually realized using interpolation methods or truncated generalised Fourier series. Control and state variables are commonly rewritten as:

$$x_i \simeq x_i^N = \sum_{k=1}^{N} \phi_k x_{ik} = \Phi X_i \qquad (3)$$

$$u \simeq u^N = \sum_{k=1}^{N} \phi_k u_k = \Phi U \qquad (4)$$

with $\Phi = [\varphi_1, ..., \varphi_N]$, $X_i = [X_{i1}, ..., X_{iN}]^T$ and $U = [u_1, ..., u_N]^T$. A wide variety of basis functions can be used to approximate the state and control variables and the choice of a particular orthogonal base is mainly dictated by the specific requirements of the control problem.

Orthogonal wavelets are a large family of functions used for a wide variety of applications. For instance, Haar wavelets can be employed to solve nonlinear optimal control problems, Legendre wavelets constitute appropriate candidates for pseudospectral method basis sets for the resolution of various boundary value problems, and other wavelet families, such as Morlet wavelet, are widely used in signal processing in diversified domains. Orthogonal wavelet bases are typically generated through a scaling and shifting process leading to a significant number of derived basis functions.

Truncated Fourier series give satisfying approximations for relatively smooth functions and have been employed in pseudospectral optimal control, including in the wave energy field (see G. Bacelli and J. V. Ringwood, "Numerical optimal control of wave energy converters," Sustainable Energy, IEEE Transactions on, vol. 6, no. 2, pp. 294-302, 2015).

Fourier approximations are particularly well adapted to wave signal approximations and constitute a good first choice for pseudospectral resolution. For finite time horizon control, the Fourier basis requires periodicity of the approximated functions in order to avoid the Gibbs phenomenon on the boundaries. Since the Fourier basis generates only periodic functions, different boundary values of the approximated functions lead to discontinuities and higher frequency harmonics are needed to obtain a correct approximation. In F. Huankun and C. Liu, "A buffer fourier spectral method for non-periodic pde," International Journal of numerical analysis and modeling, vol. 9, no. 2, pp. 460-478, 2012, a solution has been proposed to avoid such discontinuities by adding a buffer polynomial to construct an extended periodic function after which a standard Fourier pseudospectral method is applied. Lagrange polynomials are commonly used in Legendre methods, Chebyshev methods, or more generally in Jacobi methods, to interpolate or approximate the control and state variables. A certain amount of precaution has to be taken in the choice of the collocation points in order to avoid the Runge phenomenon during the interpolation.

In the present invention, to deal with realtime control and finite time control horizons requiring approximations of *non-periodic* functions in order to simulate both the transient and steady state responses of the device, we employ a basis employing HRCF functions, presented in more detail below.

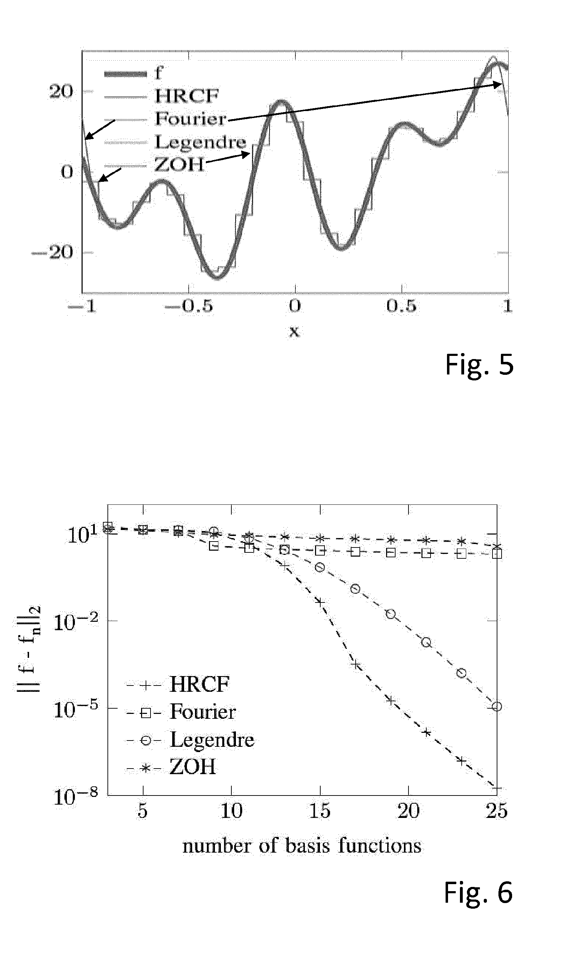

By way of example, Fig. 5 shows a comparison between the approximations of a non-periodic function defined on [-1,1] using different sets of basis functions. As an illustrative example, the approximated function presented in Fig. 6 is a sum of $N_S$ sine functions with random amplitudes, phases and periods uniformly distributed between, respectively, the following intervals [0,1],[0,$2\pi$] and, [0.5,2]; Nsis arbitrarily set to $10^3$.

Fig. 6 shows the approximation obtained with 25 functions such as ZOH functions or *Haar wavelets,* truncated Fourier series, Legendre polynomials and HRCF functions. While the legend in the original version of Fig. 6 is colour coded, the Legendre polynomials and HRCF functions give almost identical results and are indistinguishable from the initial function (heavy grey line). The truncated Fourier series is distinguishable due to the boundary discontinuities and the emergence of the Gibbs phenomenon. Haar wavelets, or ZOH functions both need a large number of basis functions to attain the same level of polynomial or HRCF approximation error. Thus for the smaller number of functions graphed in Fig. 6 for ZOH functions, these are readily distinguishable from the initial function, showing as a blocky, stepwise progression compared to the smooth initial function. As a result, a large number of ZOH functions have to be utilized for adequate performance, increasing the computational time for an optimal control problem using a standard MPC algorithm.

Fig. 6 shows how the error term drops away rapidly for HRCF representations of the Fig. 5 function with modest numbers of basis functions. Legendre representations fare reasonably well, but not as well as HRCF. Both Fourier and ZOH representations are unable to match the level of approximation of the HRCF representation with such modest numbers of basis functions.

*3) Solution route outline:* As indicated when introducing Fig. 4, the method proposed herein comprises a hierarchically-organised upper and lower loop, which, respectively, generate and track a reference trajectory. The upper loop determines the reference trajectory using a pseudospectral method with HRCF basis functions, solved by a nonlinear programming method, while the lower loop facilitates tracking of the reference trajectory in real time. Accordingly, the definition and application of the HRCF basis for pseudospectral methods is now described.

## HALF-RANGE CHEBYSHEV FOURIER FUNCTIONS

### A. Half-range Chebyshev polynomials

In D. Huybrechs, "On the fourier extension of nonperiodic functions," SIAM Journal on Numerical Analysis, vol. 47, no. 6, pp. 4326-4355, 2010, HRCF functions were introduced. An orthogonal basis for non-periodic functions is determined, based on half-range Chebyshev polynomials of the first and second kind. Half-range Chebyshev polynomials of the first and second kind of order $k$, $T_k^h$ and $U_k^h$ respectively, are orthogonal with lower order monomials with respect to the weights $1/\sqrt{(1-y^2)}$, for the first kind, and $\sqrt{(1-y^2)}$ for the second kind, on the interval [0,1]. Definitions of $Tk^h$ and $U_k^h$ are given in B. Orel and A. Perne, "Chebyshev-fourier spectral methods for nonperiodic boundary value problems," *Journal of Applied Mathematics,* vol. 2014, 2014, based on the Huybrechs 2010 work.

**Definition 1.** Let $T_k^h(y)$ be the unique normalized sequence of orthogonal polynomials satisfying

$$\int_0^1 T_k^h(y)y^l \frac{1}{\sqrt{1-y^2}}dy = 0, \quad l = 0,...,k-1 \quad (5)$$

$$\frac{4}{\pi} \int_0^1 T_k^h(y)^2 \frac{1}{\sqrt{1-y^2}} dy = 1 \qquad (6)$$

The set $\{T_k^h(y)\}_{k=0}^{\infty}$ is a set of half-range Chebyshev polynomials of the first kind.

**Definition 2.** Let $U_k^h(y)$ be the unique normalized sequence of orthogonal polynomials satisfying

$$\int_0^1 U_k^h(y) y^l \sqrt{1-y^2} dy = 0, \quad l = 0, ..., k-1 \quad (7)$$

$$\frac{4}{\pi} \int_0^1 U_k^h(y)^2 \sqrt{1-y^2} dy = 1 \qquad (8)$$

The set $\{U_k^h(y)\}_{k=0}^{\infty}$ is a set of half-range Chebyshev polynomials of the second kind.

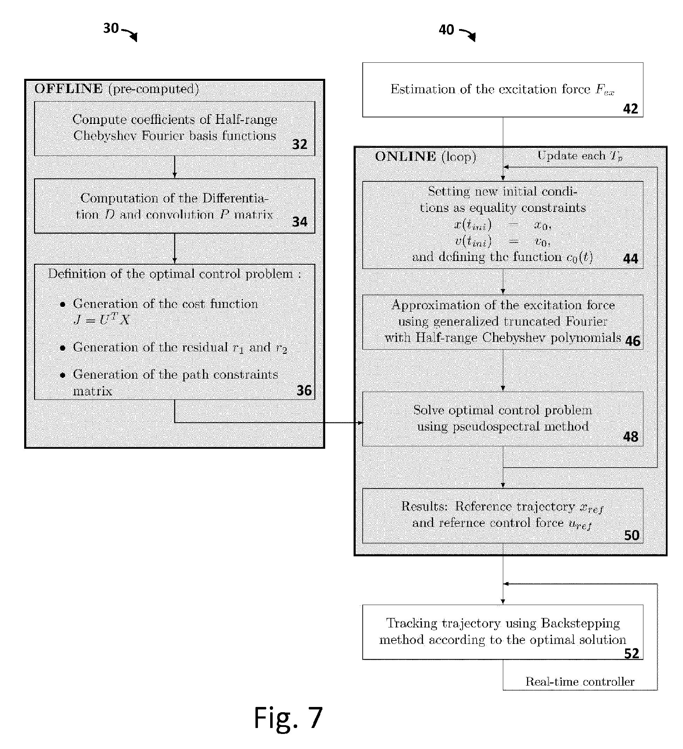

Figs. 7A and 7B show half-range Chebyshev polynomials of the first and second kinds, respectively.

B. Solution to the approximation function problem

One way to obtain the Fourier series of any nonperiodic function $f \in L^2_{[-1,1]}$, is to extend $f$ to a periodic function $g$ defined in a larger interval, in this case [-2,2]. Determination of the Fourier extension of $f$ can be stated as an optimization problem.

**Problem 1.** Let $G_n$ be the space of 4-periodic functions of the form

$$g \in G_n : g(\tau) = \frac{a_0}{2} + \sum_{k=1}^{n} a_k \cos \frac{\pi}{2} k\tau \ldots$$
$$+ b_k \sin \frac{\pi}{2} k\tau \qquad (9)$$

The Fourier extension of $f$ to the interval [-2,2] is the solution to the optimization problem

$$g_n := \arg \min_{g \in G_n} \left\| f - g \right\|_{L^2_{[-1,1]}} \qquad (10)$$

Huybrechs (supra) proved the existence and uniqueness of the solution of the problem 1, based on orthogonal polynomials called half-range Chebyshev Fourier polynomials. Two sets $\{T_k^h(\cos \frac{\pi}{2}\tau)\}_{k=0}^{n}$ and $\{U_k^h(\cos \frac{\pi}{2}\tau) \sin \frac{\pi}{2}\tau\}_{k=0}^{n-1}$ are introduced, constituting an orthonormal basis for, respectively, the (n + 1) and n dimensional spaces spanned by the 4-periodic, respectively, cosine and sine functions. The exact solution of Problem 1 is thus directly found by an orthogonal projection of $f$, as expressed in equation (11).

$$g_n(\tau) = \sum_{k=0}^{n} a_k T_k^h \left( \cos \frac{\pi}{2}\tau \right) \dots$$
$$+ \sum_{k=0}^{n-1} b_k U_k^h \left( \cos \frac{\pi}{2}\tau \right) \sin \frac{\pi}{2}\tau \tag{11}$$

where,

$$a_k = \int_{-1}^{1} f(\tau) T_k^h \left( \cos \frac{\pi}{2}\tau \right) d\tau \tag{12}$$

and,

$$b_k = \int_{-1}^{1} f(\tau) U_k^h \left( \cos \frac{\pi}{2}\tau \right) \sin \frac{\pi}{2}\tau d\tau \tag{13}$$

As was shown by B.Orel, the sets of basis functions $\left\{ T_k^h \left( \cos \frac{\pi}{2}\tau \right) \right\}_{k=0}^{n}$ and $\left\{ U_k^h \left( \cos \frac{\pi}{2}\tau \right) \sin \frac{\pi}{2}\tau \right\}_{k=0}^{n}$ can be employed in the resolution of a non-periodic boundary value problem using pseudospectral methods (see B. Orel and A. Perne, "Chebyshev-fourier spectral methods for nonperiodic boundary value problems," Journal of Applied Mathematics, vol. 2014, 2014).

C. Computation with half-range Chebyshev polynomials

*Differentiation Matrix:*

Based on the HRCF functions, B.Orel developed in an efficient method of calculation of the derivatives of truncated HRCF series (see B. Orel and A. Perne "Computations with half-range chebyshev polynomials," Journal of Computational and Applied Mathematics, vol. 236, no. 7, pp. 1753-1765, 2012). Let $g_n$ be the truncated HRCF series of a function $f \in L^2_{[-1,1]}$, so that

$$f(\tau) \simeq g_n(\tau) = \sum_{k=0}^{n} a_k T_k^h \left( \cos \frac{\pi}{2}\tau \right) \dots$$
$$+ \sum_{k=0}^{n-1} b_k U_k^n \left( \cos \frac{\pi}{2}\tau \right) \sin \frac{\pi}{2}\tau \tag{14}$$

The derivative of $g_n$ is then defined by equation (15).

$$\frac{dg_n}{d\tau} = \sum_{k=0}^{n} a'_k T_k^h \left(\cos \frac{\pi}{2}\tau\right) \dots$$

$$+ \sum_{k=0}^{n-1} b'_k U_k^n \left(\cos \frac{\pi}{2}\tau\right) \sin \frac{\pi}{2}\tau \tag{15}$$

In matrix form, $D \in R^{(2n+1)\times(2n+1)}$ is defined such that $\mathbf{f}' = D\mathbf{f}$, where $\mathbf{f} = [a_0,...,a_n,b_0,...,b_{n-1}]^T$ and $\mathbf{f}' = [a'_0,...,a'_n, b'_0,...,b'_{n-1}]^T$. (See "Computations with half-range chebyshev polynomials," Journal of Computational and Applied Mathematics, vol. 236, no. 7, pp. 1753-1765, 2012.) The differentiation matrix D is written in the following form,

$$D = \frac{\pi}{2} \begin{pmatrix} 0 & H_1 \\ H_2 & 0 \end{pmatrix} \tag{16}$$

where the matrices $H_1 \in R^{(n+1)\times n}$ and $H_2 \in R^{n\times(n+1)}$ are not expanded here for brevity; a complete exposition is to be found in B. Orel and A. Perne "Computations with half-range chebyshev polynomials," Journal of Computational and Applied Mathematics, vol. 236, no. 7, pp. 1753-1765, 2012.

*Function multiplication:*

In the same manner, the Orel & Perne (2012) paper presents a matrix formulation to determine the truncated series coefficients of the product $p_n = g_n.h_n$ of truncated series of an arbitrary function $f \in L^2_{[-1,1]}$ and a known function $h \in L^2_{[-1,1]}$. In matrix form, a matrix $F \in R^{(2n+1)\times(2n+1)}$ is defined such that $\mathbf{p} = F\mathbf{f}$, where $\mathbf{p} = [a'_0, ..., a'_n, b'_0, ..., b'_{n-1}]^T$ and $\mathbf{f} = [a_0,...,a_n,b_0,...,b_{n-1}]^T$, with

$$F = \begin{pmatrix} G_1 & G_2 \\ G_3 & G_4 \end{pmatrix}, \tag{17}$$

where the matrix $G_1 \in R_{(n+1)\times(n+1)}$, $G_2 \in R_{(n+1)\times n}$, $G_3 \in R_{n\times(n+1)}$ and $G_4 \in R_{n\times n}$ are functions of the coefficients of the truncated series $g_n$ that approximates the known function h, and are defined in the Orel & Perne (2012) paper.

*Convolution product:*

The convolution product between an arbitrary causal function $f \in L^2(R)$ and a known causal function $h \in L^2(R)$ is defined by equation (18).

$$(f * h)(t) = \int_0^t f(s).h(t-s)ds, \; \forall t \in \mathbb{R}^+ \tag{18}$$

Convolution products can occur in dynamical equations describing physical systems and an illustration is given in the chosen wave energy converter application below where the fluid-structure interaction force, more specifically the radiation force, involves a convolution product with the radiation kernel function and the velocity of the floating body.

The determination of the radiation force is generally achieved using various approximation methods, generally leading to a state-space model of the convolution product, see T. Perez and T. I. Fossen, "Time-vs. frequency-domain identification of parametric radiation force models for marine structures at zero speed," Modeling, Identification and Control, vol. 29, no. 1, pp. 1-19, 2008. For example, Prony's method (G. Prony, "Essai experimental et analytique, etc," J. de l'Ecole Polytechnique, vol. 1, no. 2, pp. 24-76, 1975) approximates the radiation kernel function by a sum of complex exponentials, creating new state variables with their respective partial differential equations. Using such approximations will result in the unwelcome increase in the dimension of the function $\mathbf{f}(\mathbf{x},u)$, taking into account new radiation state variables.

In the present embodiment, a direct approximation of the radiation kernel function is achieved using the HRCF functions. The coefficients of the truncated HRCF series of the convolution product $c = [a'_0, ..., a'_n, b'_0, ..., b'_{n-1}]^T$ between an arbitrary function $f \in L^2_{[-1,1]}$ and the known kernel function is given by:

$$\mathbf{c} = P\mathbf{f}, \qquad\qquad (19)$$

where $\mathbf{f} = [a_0,...,a_n,b_0,...,b_{n-1}]^T$ is the vector of coefficients of the truncated HRCF series of $f$, and $P \in R^{(2n+1)\times(2n+1)}$ is the convolution matrix depending on the kernel function of the convolution product. A direct application on hydrodynamic radiation convolution product is presented in an appendix.

## THE WAVE ENERGY DEVICE CASE

As discussed previously, real-time wave energy control algorithms deals with nonperiodic signals, since the prediction horizon is limited, and wave surface elevation, fluid-structure interaction forces and body motion are usually described using spectral forms. The choice of HRCF functions appears to fit all the requirements needed to solve the WEC optimal control problem with a pseudospectral method.

Furthermore, the exponential rate of convergence of the Fourier series of the extended periodic function offers a better rate of convergence than extensions realized with the use of cut-off functions (see D. Huybrechs, "On the fourier extension of nonperiodic functions," SIAM Journal on Numerical Analysis, vol. 47, no. 6, pp. 4326-4355, 2010; and F. Huankun and C. Liu, "A buffer fourier spectral method for non-periodic pde," International Journal of numerical analysis and modeling, vol. 9, no. 2, pp. 460-478, 2012).

*A. WEC model*

For clarity, we consider a wave energy device with only one degree of freedom. The fluid is assumed to be inviscid and the flow incompressible, allowing the use of potential theory to determine fluid-structure interactions. The body displacement and the amplitude of the wave field are considered small enough to use linearised potential theory, leading to a linear equation of motion of the device, or Cummin's equation (see W. Cummins, "The impulse response function and ship motions," DTIC Document, Tech. Rep., 1962), defined by:

$$(I+I_\infty)\ddot{x} + \int_0^t K(t-s)\dot{x}(s)ds + S_h x = F_{ex} + F_c, \qquad (20)$$

where, $x, \dot{x}, \ddot{x}$ are the body displacement and its first and second derivatives, $F_c$ is the control force, m is the mass or inertia of the body (depending on the type of degree of freedom considered), $\mu_\infty$ corresponds to the infinite frequency added mass of the device, $K$ is the kernel function for the radiation convolution product, used to determine radiation forces from the velocity of the body, $S_h$ is the linearised hydrostatic stiffness and $F_{ex}$ corresponds to the wave excitation force, or Froude-Krylov force, experienced by the device. Recent control approaches for nonlinear wave energy converter models based on pseudospectral method are presented in G. Li, "Nonlinear model predictive control of a wave energy converter based on differential flatness parameterisation," International Journal of Control, pp. 1-10, 2015.

From (20) and using the affine transformation

$$g : [-1, 1] \rightarrow [t_0, t_0 + T], \quad \tau \mapsto \frac{T}{2}(\tau + 1) + t_0$$

we define the scaled excitation force $f_{ex} = F_{ex} \circ g$, the kernel function of the radiation convolution product $k = K \circ g$, position

$x_1 = x \circ g$, velocity $x_2 = \dot{x} \circ g$ and control force $u = F_c \circ g$, leading to the system of differential equations (21):

$$\begin{cases} \dot{x}_2 = \dfrac{T}{2}\left(f_{ex} + u \ldots \right. \\ \qquad - \displaystyle\int_{g^{-1}(0)}^{\tau} k(\tau - s + g^{-1}(0))x_2(s)\,ds \ldots \\ \qquad \left. -S_h x_1\right)/(I + I_\infty) \\ \dot{x}_1 = \dfrac{T}{2}x_2 \end{cases} \qquad (21)$$

where $g^{-1}(0) = -1 - 2t_0/T$ is the antecedent of 0 from the affine transformation $g$. The system of differential equations (21) defines the equality constraints in the optimal control problem (2), specifying the function **f** of the state variable **x** = $[x_1,x_2]^T$ and the control variable u via the following equation,

$$\dot{\mathbf{x}} = \begin{bmatrix} \dot{x}_1 \\ \dot{x}_2 \end{bmatrix} = \mathbf{f}(\mathbf{x}, u, \tau), \tau \in [-1, 1] \qquad (22)$$

Practical limitations are considered on the body motion, control force and power output, to ensure feasibility of the control, and the safety and durability of the wave energy device in real sea conditions. For all $\tau \in$ [-1,1],

$$\begin{cases} |x_1(\tau)| \le X_{max} \\ |x_2(\tau)| \le V_{max} \\ |u(\tau)| \le U_{max} \end{cases} \qquad (23)$$

where $X_{max}$, $V_{max}$, $U_{max}$ are real positive constants corresponding to position, velocity and control force limitations determined in advance to ensure feasibility and safety. Inequality constraints are rewritten in a matrix form using approximation functions, and $\forall\, \tau \in$ [-1,1],

$$\mathbf{H}(\mathbf{x}, u) = \left( \begin{bmatrix} \Phi(\tau) \\ -\Phi(\tau) \end{bmatrix} \otimes I_3 \right) \mathbf{X} - \begin{bmatrix} 1 \\ 1 \end{bmatrix} \otimes X_{max} \le 0 \qquad (24)$$

where $X = [X_1^T, X_2^T, U^T]^T$ represents the projections of the state and control variables, $X_{max} = [X_{max}, V_{max}, U_{max}]^T$ represents position, velocity and control force limitations, $I_3$ is the 3-dimension identity matrix and $\otimes$ denotes the Kronecker product. Equation (24) specifies the linear function **H** from the optimal control formulation in (2).

Finally, the cost function, representing the absorbed energy, is written using the approximation functions, in the following form,

$$J = -\int_{-1}^{1} U^T \Phi^T(\tau)\Phi(\tau)X_2\,dt \qquad (25)$$

The cost function *J* represents the recovered energy by the control through the control force u, determined by integrating instantaneous absorbed power over the control horizon. In the case of orthonormal approximation functions, with respect to the inner product, $\langle \phi_i, \phi_j \rangle = \int_{-1}^{1} \phi_i(\tau)\,\phi_j(\tau)dt,$ the cost function described in equation (25) is simplified into the form $J = -U^T X_2$.

*B. Cancellation of the residuals*

Replacing state variable derivatives terms and convolution terms coming from the determination of the radiation force in the expression of **f** from equation (21), one can express the two residual terms $r_1$ and $r_2$ as

$$\begin{cases} r_1(\tau) = \Phi(\tau)(\dfrac{2(I+I_\infty)}{T}DX_2 - PX_2 \dots \\ \qquad\qquad - S_h X_1 - U) - f_{ex}(\tau) - c_0(\tau) \\ r_2(\tau) = \Phi(\tau)\left(X_2 - \dfrac{2}{T}DX_1\right) \end{cases} \qquad (26)$$

Trial functions used by pseudospectral methods are Dirac distributions, leading to the cancellation of residual terms at particular instants, or collocation points. The interval [-1,1] is covered by $N+1$ collocation points $\tau_i$, i.e. Chebyshev points of the second kind.

$$\tau_i = -\cos\left(\frac{\pi i}{N}\right), \qquad i = 0, 1, ..., N. \qquad (27)$$

Cancellation of the first residual term $r_1$ at the collocation points leads to $N+1$ equations. The cancellation of the second residual term $r_2$ can be simplified, leading to $N+1$ equations linking the velocity and position projection vectors $X_1$ and $X_2$, as

$$\begin{cases} r_1(\tau_i) = 0, \quad i = 0, 1, ..., N. \\ X_2 - \dfrac{2}{T}DX_1 = 0 \end{cases} \qquad (28)$$

This leads to 2N+2 dynamical equations determining, for a given projection vector U of the control variable u, the 2N+2 variables composed of the $N+1$ components of $X_1$ and $X_2$.

*C. Trajectory tracking*

Various control algorithms, such as PID (see Y. Choi and W. K. Chung, PID trajectory tracking control for mechanical systems. Springer, 2004, vol. 298), sliding control (see V. Utkin, J. Guldner, and J. Shi, Sliding mode control in electromechanical systems. CRC press, 2009, vol. 34) or backstepping control (see S. M. Rozali, M. Rahmat, and A. R. Husain, "Backstepping design for position tracking control of nonlinear system," in Control System, Computing and Engineering (ICCSCE), 2012 IEEE International Conference on. IEEE, 2012, pp. 77-82), can be used to realise the tracking of the reference trajectory.

For the wave energy device case study, the chosen lower control loop is based on a backstepping method and is described now. The variables $x_1$ and $x_2$ refer, respectively, to the position and the velocity of the device, and the reference position and velocity trajectories are denoted, respectively, by $x_{1,ref}$ and $x_{2,ref}$. $x_{1,ref}$ and $x_{2,ref}$ are known and determined previously by the upper control loop.

We can define the function $V_1$ depending on the error $e_1 = x_1 - x_{1,ref}$, as

$$V_1 = \frac{1}{2}e_1^2 \tag{29}$$

In order for $V_1$ to be Lyapounov stable, we define the desired velocity $\dot{x}_d = x_{2,ref} - \tau_1 e_1$ and the function $V_2$, as

$$V_2 = V_1 + \frac{1}{2}e_2^2, \tag{30}$$

where $e_2 = x_2 - x_{2,ref}$. The derivative of $V_2$ is

$$\dot{V}_2 = -\tau_1 e_2^2 + e_2(e_1 + \ddot{x} - \ddot{x}_d) \tag{31}$$

Replacing the expression for the acceleration $\ddot{x}$ from Cummin's equation (20) in the derivative function $V_2$, we obtain

$$\dot{V}_2 = -\tau_1 e_1^2 + e_2\left(e_1 + \frac{1}{I+I_\infty}(F_{ex} + F_c - K * \dot{x} - S_h x) - \ddot{x}_d\right) \tag{32}$$

where * denotes the convolution product. In order for $V_2$ to be Lyapounov stable, the control force $u$ has to be of the following form,

$$F_c = (I + I_\infty)(e_1 - \ddot{x}_d + \tau_2 e_2) - F_{ex} + S_h x + K * \dot{x} \tag{33}$$

## Results of simulation

Reverting now to the geometry shown in Fig. 1 and the control solution outlined in Fig. 4, the process described above in mathematical form is now outlined in flowchart form in Fig. 7.

In Fig, 7, the process is divided into two halves. On the left side 30, a number of pre-computed parameters are indicated. These are specific to the particular physical system being modelled, and include the computation 32 of the coefficients of the HRCF basis functions (equations 5 and 6 for HRCF polynomials of the first kind and equations 7 and 8 for the second kind), the computation 34 of the differentiation matrix D (equation 16) and convolution matrix P (equation 19 and appendix), and the definition 36 of the optimal control problem. The latter step involves generating the cost function to be used (equation 25), the generation of the residuals (equation 26), and of the path constraints matrix (equation 24).

In the right hand side of the flowchart 40, a real time loop is implemented. The excitation force is estimated 42 based on sensor data (e.g. a wave buoy). Then in a moving window with period Tp, the current velocity and position of the moving body are set as the initial conditions, allowing definition of the convolution function co(t), step 44.

In step 46, the excitation force is approximated using generalised truncated half-range Chebyshev-Fourier (HRCF) basis functions, allowing the previously described mathematical treatment to be applied to the system.

In step 48, the control problem is solved, taking the pre-computed parameters from the left-hand side 30 of the flowchart, cancelling the residuals and determining the maximum energy achievable over the future window, based on the relationship $J = U^T X$, and the dynamical equations describing the relationship between the projection vector $U$ of the control variable $u$, and the components of $X_1$ and $X_2$. The number of equations is (2N+1) for the dynamical equation linking $U$, $X_1$ and $X_2$. This corresponds to the first residual term $R_1$ in equation 28, that we cancel at (2N+1) collocation points. There are also (2N +1) equations linking $X_1$ and $X_2$, which corresponds to the second residual term $R_2$ in equation (28). Thus, the vectors $U$, $X_1$ and $X_2$ lead to 3*(2N + 1) variables. Cancellation of $R_1$ and $R_2$, results in 2*(2N +1) equations. The algorithm has thus (2N+1) degrees of freedom to choose the optimal coefficients of the control force $U$.

The output 50 is a reference trajectory and reference control force which are passed to the real time controller 16 (Fig. 4). The real time controller uses these references to generate a control force command to the PTO, and in step 50, the real-time controller tracks the trajectory using the backstepping method.

The results are presented for the system of Fig. 1, for a significant wave height of $H_s$ = 1m and a peak wave period of $T_w$ = 8s, using a Bretschneider wave model. The computational time to solve one optimal control problem over the finite prediction horizon is less than 0.6s for the complete simulation horizon, allowing its real-time application.

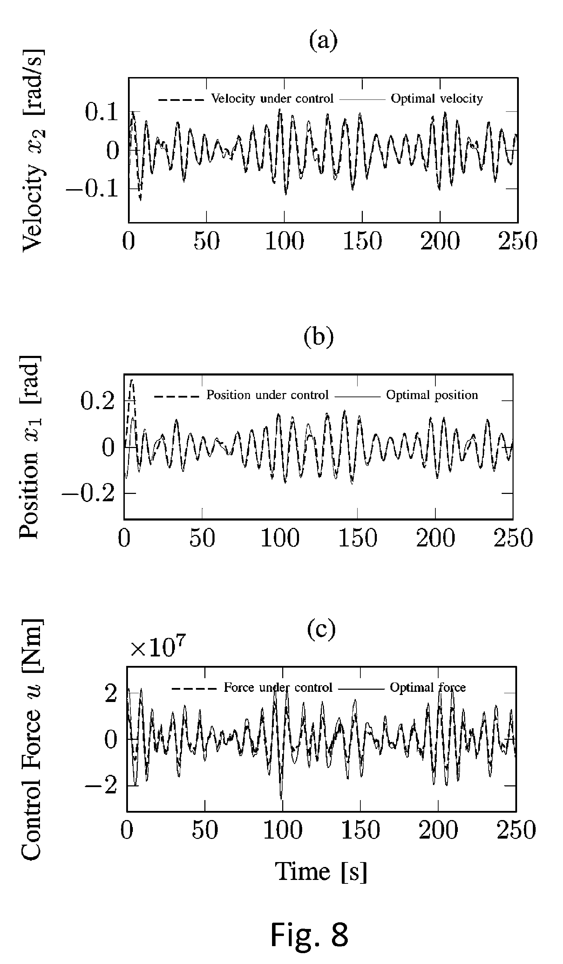

Fig. 8 shows the optimal trajectory for the position (Fig. 8(a)) and velocity (Fig. 8(b)) of the device, and the optimal control force(Fig. 8(c)), while the dashed curves represent the results from the real-time receding horizon control algorithm described above, for a 250s simulation. The optimal trajectory can be theoretically calculated from the exact cancellation of the reactive terms in the equation of motion (20) by the optimal control force, *i.e.* stiffness, mass and added mass terms (see J. Falnes, Ocean waves and oscillating systems: linear interactions including wave-energy extraction. Cambridge university press, 2002). In the optimal case, the device is brought into resonance for all frequencies and thus a small variation of the control force can induce large displacement differences. The velocity and control force determined using the pseudospectral method are seen to be close to the optimal solution from Fig. 8. However, some differences between the optimal and calculated position of the wave energy converter, due to restoring force terms, are also evident. Nevertheless, the differences between the optimal trajectory and the actual position of the device under control do not significantly affect energy absorption, since the variations are of lower frequency than the wave excitation, and relate to (stored) potential energy that is not directly involved in the energy absorption.

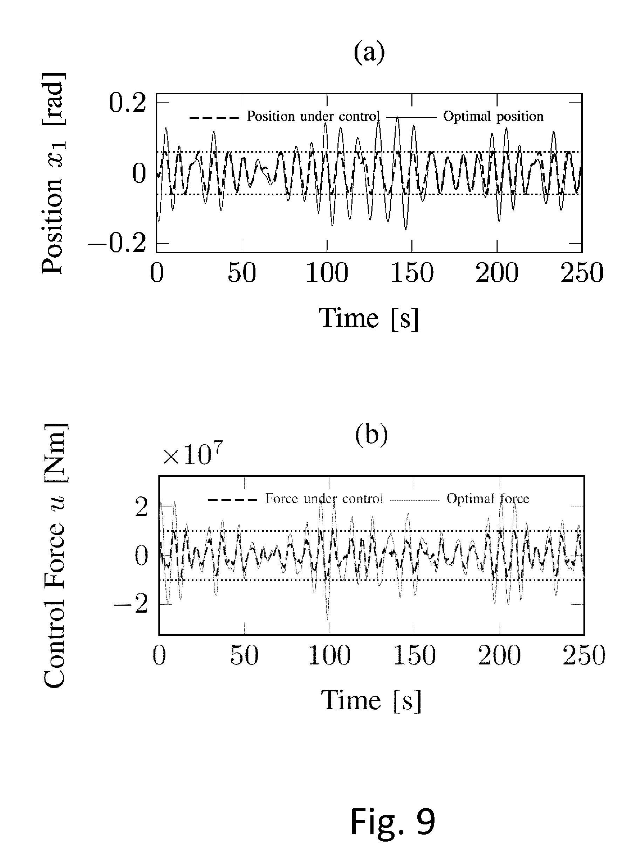

Fig. 9 shows the optimal unconstrained trajectories (solid line) and actual trajectories of the device under control (dashed line). The horizontal dotted lines show the position under constraints (Fig. 9(a)) and control force under constraints (Fig. 9(b)) for a 250s simulation.

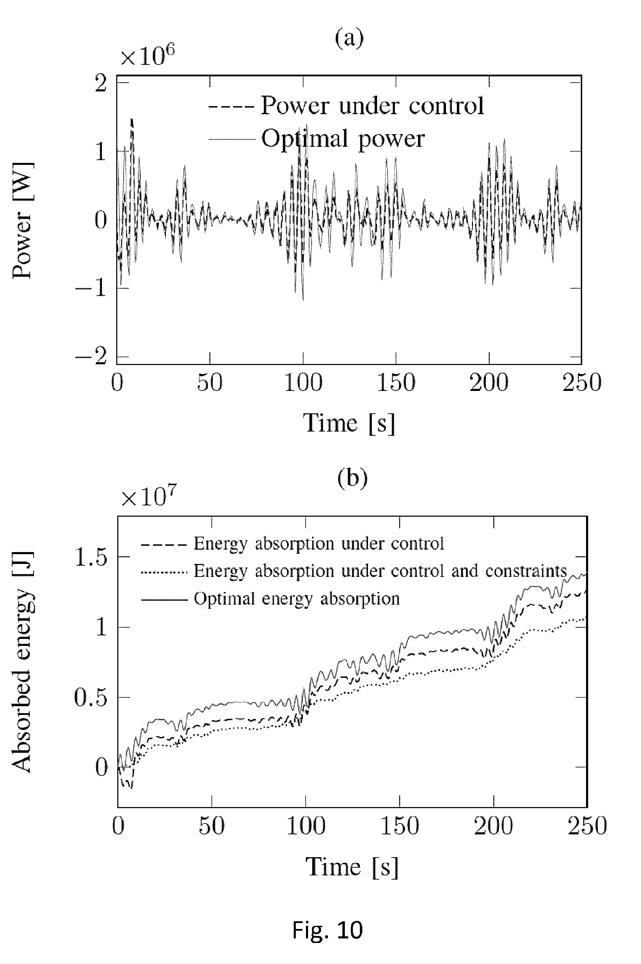

Fig. 10 presents the optimal absorbed power and the maximal energy absorbed by the wave energy device, and under control. Despite variations from the optimal trajectory, specifically for the position and the control force, the control gives a large absorption rate, and the total efficiency reaches 98.2%, meaning that almost all the available energy is recovered.

It can be seen from these results that the application of pseudospectral methods for the real-time receding-horizon energy maximisation problem provides an excellent solution due to the choice of a basis function that can cater for both transient and steady-state response components. In particular, to approximate non-periodic functions, specific adjustments need to be made, for example using cut-off functions to ensure periodicity. HRCF functions complement Fourier analysis and satisfy the non-periodicity requirement without introducing bias, via the direct transformation of the input variable, and some additional computation, since HRCF functions are directly implementable in the pseudospectral approach.

The method described herein is adjustable in computational complexity in order to match real-time requirements. The number of basis functions employed and the number of iterations in the optimization process constitute variables that have to be adapted to the control hardware limitations. The number of basis functions corresponds to the dimension of the space where the optimization algorithm searches for a solution, hence, the computational time can be reduced if the solution depends only on few variables. Pseudospectral methods present a pragmatic approach to solve optimal control problems, and allows path limitations that ensure safety and durability of the wave energy device to be taken into account.

The solution according to the invention suits renewable energy systems, where the objective is to maximise converted energy, subject to the retention of stability and adherence to physical system constraints. In particular, the HRCF basis function set is well suited to the wave energy control problem, where the excitation force and system variables are well modelled using harmonic signals. The example case study shows that the developed real-time controller can achieve energy capture rates approaching the theoretical optimum, for a flap-type wave energy converter. The same approach can be used for other energy converter apparatuses, by following the same steps of parametrising the model and the excitation force in HRCF terms, approximating the state and control functions using truncated HRCF series, and solving the resulting optimal control problem by cancellation of the residuals.

**APPENDIX: CONVOLUTION PRODUCT**

Cummins' equation (20) involves the determination of a convolution product in order to estimate part of the radiation force acting on the device hull. The convolution product between the scaled velocity $x_2$ of the device and the scaled radiation kernel function $k$, is split into two terms $c_0$ and $c$,

$$L(\tau) = \int_{g^{-1}(0)}^{\tau} k\left(\tau - s + g^{-1}(0)\right) x_2(s)ds$$
$$= c_0(\tau) + c(\tau) \tag{34}$$

where

$$\begin{cases} c_0(\tau) = \int_{g^{-1}(0)}^{-1} k\left(\tau - s + g^{-1}(0)\right) x_2(s) ds \\ c(\tau) = \int_{-1}^{\tau} k\left(\tau - s + g^{-1}(0)\right) x_2(s) ds \end{cases} \quad (35)$$

For $s \in [g^{-1}(0),-1]$, $x_2$ corresponds to past values of the velocity, and is thus known. The first part of the convolution product, $c_0$, is directly computed based on past velocity values. Replacing the state variable $x_2$ in the second term c, by its HRCF truncated series, defined in equation (36), get

$$x_2(\tau) = \sum_{k=0}^{N} \phi_k(\tau) x_{2k} = \Phi(t) X_2, \quad (36)$$

and,

$$c(\tau) = \sum_{k=0}^{N} c_k(\tau) x_{2k}, \quad (37)$$

with

$$c_k(\tau) = \int_{-1}^{\tau} k(\tau - s + g^{-1}(0)) \phi_k(s) ds. \quad (38)$$

The orthogonal projection of $c_k$ over each basis function $\varphi_j$ is $p_{kj}$ and defined by equation (39).

$$p_{kj} = \int_{-1}^{1} c_k(\tau) \phi_j(\tau) d\tau \quad (39)$$

Finally, the matrix $P = [p_{kj}]_{k,j}$ is used to define the radiation force, so that

$$\begin{aligned} L(\tau) &= c_0(\tau) + \sum_{k=0}^{N} \sum_{j=0}^{N} \phi_j(t) p_{kj} x_{2k} \quad (40) \\ &= c_0(\tau) + \Phi(\tau) P X_2 \quad (41) \end{aligned}$$

The expression for the convolution term is replaced in the expression of the equality constraints (21), i.e. inside the function **f.**

## Claims

1. A computer-implemented method of controlling a power take-off (PTO) of an energy converter apparatus having at least one body which receives energy from their environment and whose energy is absorbed by said PTO, the method comprising the steps of:

(a) receiving an input describing the motion of the at least one body making up the apparatus;

(b) predicting the excitation force $F_{ex}$ which will be incident on the body over a prediction horizon Hp, by approximating said excitation force using generalised truncated half-range Chebyshev-Fourier (HRCF) basis functions;

(c) solving an optimal control problem, defined in terms of optimising a cost function J representing the energy absorbed by the PTO over the prediction horizon Hp, using a HRCF pseudospectral optimal control wherein the state and control variables are approximated by their truncated half-range Chebyshev Fourier series to generate an optimal reference trajectory;

(d) providing as an output to said PTO a control signal adapted to cause the PTO to approximate said optimal reference trajectory; and

(e) repeating steps (a) to (d) after a calculation interval Tc where Tc < Hp.

2. A computer-implemented method as claimed in claim 1, wherein step (c) comprises:

(vi) expressing the motion of the body in terms of a projection matrix X1 defining the body's position, and a projection matrix X2 defining the body's velocity;

(vii) defining a control variable vector and its projection matrix $U^T$;

(viii) defining a cost function $J = -U^T X_2$

(ix) determining a set of 2N + 2 variables defining the N + 1 components of X1 and the N + 1 components of X2 for a given projection vector U of the control variable by cancellation of residuals at a series of N + 1 collocation points within the prediction horizon interval; and

(x) solving the cost function $J = -U^T X_2$ to determine an optimal trajectory [X1, X2, U] to optimise energy absorption while respecting predefined constraints on the position, velocity and control force.

3. A computer-implemented method as claimed in claim 1 or 2, further comprising the step of tracking the trajectory of said body using a real time controller.

4. A computer-implemented method as claimed in any of claims 1-3, wherein said energy conversion apparatus is a wave energy converter system.

5. A computer-implemented method as claimed in claim 4, wherein said step of predicting the excitation force comprises observing incident wave motion on the apparatus and generating a prediction from said observed motion.

6. A computer-implemented method as claimed in any preceding claim, wherein said prediction horizon $H_P$ is in the range of 2 to 100 seconds, preferably 5 to 50 seconds.

7. A computer-implemented method as claimed in any preceding claim, wherein the state variables are truncated as a series of N basis functions where N is between 5 and 100, more preferably between 10 and 50.

8. A processor programmed to implement the computer-implemented method of any preceding claim.

9. An energy conversion apparatus comprising at least one body which receives energy from its environment, a power take-off (PTO) configured to absorb energy from said body, and a processor according to claim 8 outputting a control signal for said PTO.

Fig. 1

Fig. 2

Fig. 3

Updated each $T_c$ seconds

$\eta$

**PREDICTION**

Estimation on the prediction horizon $H_p$ of the excitation force $F_{ex}$ for $t \in [t_i, t_i + H_c]$

$x, \dot{x}$

12

$F_{ex}$

**TRAJECTORY GENERATION**

Pseudospectral method using half-range Chebyshev Fourier basis functions to solve an energy maximization problem under constraints.

$x, \dot{x}$

14

$x_{ref}, \dot{x}_{ref}, u_{ref}$

Real-time controller

**TRAJECTORY TRACKING**

PID Controller, Backstepping method, state-space tracking controller,...

$x, \dot{x}$

16

$u_c$, Control force command

**PTO**

Hydraulic or electric technology

18

$u$, control force

**WEC**

Wave energy converter

20

$x, \dot{x}$

$x, \dot{x}$, measurements of the position and velocity of the WEC

## Fig. 4

Fig. 5

Fig. 6

30

40

**OFFLINE** (pre-computed)

Compute coefficients of Half-range Chebyshev Fourier basis functions **32**

Computation of the Differentiation $D$ and convolution $P$ matrix **34**

Definition of the optimal control problem :

- Generation of the cost function $J = U^T X$
- Generation of the residual $r_1$ and $r_2$
- Generation of the path constraints matrix **36**

Estimation of the excitation force $F_{ex}$ **42**

**ONLINE** (loop)  Update each $T_p$

Setting new initial conditions as equality constraints
$$x(t_{ini}) = x_0,$$
$$v(t_{ini}) = v_0,$$
and defining the function $c_0(t)$ **44**

Approximation of the excitation force using generalized truncated Fourier with Half-range Chebyshev polynomials **46**

Solve optimal control problem using pseudospectral method **48**

Results: Reference trajectory $x_{ref}$ and refernce control force $u_{ref}$ **50**

Tracking trajectory using Backstepping method according to the optimal solution **52**

Real-time controller

# Fig. 7

(a)

(b)

(c)

Fig. 8

(a)

(b)

Fig. 9

(a)

(b)

Fig. 10

Europäisches
Patentamt

European
Patent Office

Office européen
des brevets

# EUROPEAN SEARCH REPORT

**Application Number**

EP 16 16 6753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/030164 A2 (NAT UNIV IRELAND [IE]; BACELLI GIORGIO [IE]; RINGWOOD JOHN [IE]; GILLO) 7 March 2013 (2013-03-07)<br>* pages 1,2,4,5 *<br>* claims 1,9 *<br>* figures 1,4 * | 1-9 | INV.<br>F03B13/14<br>F03B15/00<br>G05B13/04 |
| X,D | G. BACELLI; J. V. RINGWOOD: "Numerical optimal control of wave energy converters",<br>SUSTAINABLE ENERGY, IEEE TRANSACTIONS,<br>vol. 6, no. 2, 2015, pages 294-302,<br>XP002761958,<br>* abstract *<br>* page 294 - page 296 *<br>* page 299 - pages 300, 302 * | 1-9 | |
| A,D | B. OREL; A. PERNE: "Chebyshev-fourier spectral methods for nonperiodic boundary value problems",<br>JOURNAL OF APPLIED MATHEMATICS,<br>vol. 2014, 1 June 2014 (2014-06-01), pages 1-10, XP002761959,<br>* pages 1-4,9 * | 1-9 | |
| | | | **TECHNICAL FIELDS SEARCHED (IPC)**<br>G05B<br>F03B |

The present search report has been drawn up for all claims

| Place of search | Date of completion of the search | Examiner |
|---|---|---|
| The Hague | 22 September 2016 | Dörre, Thorsten |

EPO FORM 1503 03.82 (P04C01)

EP 3 236 062 A1

## ANNEX TO THE EUROPEAN SEARCH REPORT
## ON EUROPEAN PATENT APPLICATION NO.

EP 16 16 6753

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2016

| Patent document cited in search report | Publication date | Patent family member(s) | Publication date |
|---|---|---|---|
| WO 2013030164 A2 | 07-03-2013 | NONE | |

EPO FORM P0459

For more details about this annex : see Official Journal of the European Patent Office, No. 12/82

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CRETEL, JULIEN A.M. et al.** Maximisation of energy capture by a wave-energy point absorber using model predictive contro. *Proceedings of the 18th IFAC World Congress,* 2011, 3714-3721
- **HALS, JØRGEN et al.** Constrained optimal control of a heaving buoy wave-energy converter. *Journal of Offshore Mechanics and Arctic Engineering,* 2011, vol. 133 (1), 011401
- **G. BACELLI ; J. V. RINGWOOD.** Numerical optimal control of wave energy converters. *Sustainable Energy, IEEE Transactions,* 2015, vol. 6 (2), 294-302
- **G. BACELLI ; J. RINGWOOD.** Constrained control of arrays of wave energy devices. *International Journal of Marine Energy,* 2013, vol. 34, e53-e69
- **M. FOLLEY ; T. WHITTAKER ; J. VANT HOFF.** The design of small seabed-mounted bottom-hinged wave energy converters. *Proceedings of the 7th European Wave and Tidal Energy Conference,* 2007, vol. 455
- **G. DELHOMMEAU.** Seakeeping codes aquadyn and aquaplus. *19th WEGEMT School Numerical Simulation of Hydrodynamics: Ships and Offshore Structures,* 1993
- Wave variability and wave spectra for wind generated gravity waves. **C. BRETSCHNEIDER.** Tech. Memo. USArmy Corps of Eng, 1959
- A fast algorithm for nonlinearly constrained optimization calculations. **M. J. POWELL.** Numerical analysis. Springer, 1978, 144-157
- **P. V. KOKOLOVIE.** *The joy of feedback: nonlinear and adaptive,* 1992
- **Y. NESTEROV ; A. NEMIROVSKII ; Y. YE.** Interior-point polynomial algorithms in convex programming. *SIAM,* 1994, vol. 13
- **G. BACELLI ; J. V. RINGWOOD.** Numerical optimal control of wave energy converters. *Sustainable Energy, IEEE Transactions on,* 2015, vol. 6 (2), 294-302
- **F. HUANKUN ; C. LIU.** A buffer fourier spectral method for non-periodic pde. *International Journal of numerical analysis and modeling,* 2012, vol. 9 (2), 460-478

- **D. HUYBRECHS.** On the fourier extension of nonperiodic functions. *SIAM Journal on Numerical Analysis,* 2010, vol. 47 (6), 4326-4355
- **B. OREL ; A. PERNE.** Chebyshev-fourier spectral methods for nonperiodic boundary value problems. *Journal of Applied Mathematics,* 2014, vol. 2014
- **B. OREL ; A. PERNE.** Computations with half-range chebyshev polynomials. *Journal of Computational and Applied Mathematics,* 2012, vol. 236 (7), 1753-1765
- Computations with half-range chebyshev polynomials. *Journal of Computational and Applied Mathematics,* 2012, vol. 236 (7), 1753-1765
- **T. PEREZ ; T. I. FOSSEN.** Time-vs. frequency-domain identification of parametric radiation force models for marine structures at zero speed. *Modeling, Identification and Control,* 2008, vol. 29 (1), 1-19
- **G. PRONY.** Essai experimental et analytique, etc. *J. de l'Ecole Polytechnique,* 1975, vol. 1 (2), 24-76
- **W. CUMMINS.** The impulse response function and ship motions. *DTIC Document, Tech. Rep.,* 1962
- **G. LI.** Nonlinear model predictive control of a wave energy converter based on differential flatness parameterisation. *International Journal of Control,* 2015, 1-10
- **Y. CHOI ; W. K. CHUNG.** PID trajectory tracking control for mechanical systems. Springer, 2004, vol. 298
- **V. UTKIN ; J. GULDNER ; J. SHI.** Sliding mode control in electromechanical systems. CRC press, 2009, vol. 34
- Backstepping design for position tracking control of nonlinear system. **S. M. ROZALI ; M. RAHMAT ; A. R. HUSAIN.** Control System, Computing and Engineering (ICCSCE), 2012 IEEE International Conference. IEEE, 2012, 77-82
- **J. FALNES.** Ocean waves and oscillating systems: linear interactions including wave-energy extraction. Cambridge university press, 2002